# EUROPÄISCHE PATENTSCHRIFT

(11) **EP 3 008 357 B1**
(45) Veröffentlichungstag und Bekanntmachung des Hinweises auf die Patenterteilung: **10.01.2018**
(21) Anmeldenummer: 14728431.9
(22) Anmeldetag: 13.05.2014
(51) Int. Cl.: F16D 25/08, F16D 48/02

(54) **KOLBEN-ZYLINDER-ANORDNUNG FÜR EINE HYDRAULISCHE AUSRÜCKEINRICHTUNG, INSBESONDERE EIN GEBERZYLINDER FÜR EINE HYDRAULISCHE KUPPLUNGSBETÄTIGUNGSEINRICHTUNG**
PISTON/CYLINDER ARRANGEMENT FOR A HYDRAULIC DISENGAGEMENT DEVICE, IN PARTICULAR A MASTER CYLINDER FOR A HYDRAULIC SHIFT ACTUATING DEVICE
ENSEMBLE PISTON-CYLINDRE DESTINÉ À UN DISPOSITIF DE DÉBRAYAGE HYDRAULIQUE, EN PARTICULIER MAÎTRE-CYLINDRE DESTINÉ À UN DISPOSITIF D'ACTIONNEMENT D'EMBRAYAGE HYDRAULIQUE

(30) Priorität: 10.06.2013 DE 102013210780; 18.12.2013 DE 102013226486
(43) Veröffentlichungstag der Anmeldung: 20.04.2016
(73) Patentinhaber: Schaeffler Technologies AG & Co. KG, 91074 Herzogenaurach (DE)
(72) Erfinder: GRABENSTÄTTER, Jan, 76593 Gernsbach (DE); OSTER, Julien, F-67480 Neuhaeusel (FR)
(86) Internationale Anmeldenummer: PCT/DE2014/200209
(87) Internationale Veröffentlichungsnummer: WO 2014/198267

(56) Entgegenhaltungen:
- WO-A1-97/01034
- WO-A1-2012/097854
- DE-A1-102011 080 924
- US-A1- 2005 074 349

## Beschreibung

Die Erfindung betrifft eine Kolben-Zylinder-Anordnung für eine hydraulische Ausrückeinrichtung, insbesondere ein Geberzylinder für eine hydraulische Kupplungsbetätigungseinrichtung, umfassend ein Gehäuse, in welchem ein Kolben axial beweglich gelagert ist, wobei vor dem Kolben in dessen Betätigungsrichtung ein Primärraum aufgespannt ist, welcher mittels einer, den Kolben radial umspannenden Primärdichtung gegen einen Sekundärraum zwischen dem Gehäuse und dem Kolben abgedichtet ist.
Hydraulische Geberzylinder, wie sie in Kupplungsbetätigungssystemen Anwendung finden, bestehen aus einem Gehäuse, in welchem ein Kolben axial beweglich gelagert ist. Vor dem Kolben ist ein Primärraum aufgespannt, in dem eine Hydraulikflüssigkeit zum Nehmerzylinder hin verschoben wird. Ein Sekundärraum, welcher mit einem Reservoir verbunden ist, befindet sich zwischen dem Kolben und dem Gehäuse. Das Gehäuse umfasst eine Nut, über welche bei entsprechender Stellung einer, an dem Kolben angeordneten Primärdichtung der Primärraum mit dem Sekundärraum verbunden ist, um dadurch Hydraulikflüssigkeit austauschen zu können. Um zu starke Unterdrücke im Primärraum zu vermeiden, sind Geberzylinder bekannt, bei denen der Unterdruck im Primärraum über ein Rückschlagventil Hydraulikflüssigkeit vom Sekundärraum in den Primärraum ansaugt. Das Rückschlagventil ist beispielsweise als ein Plattenventil oder ein Federrückschlagventil ausgebildet. Es sind auch Ventile bekannt, bei welchen an der Primärdichtung ein Flüssigkeitsdurchtritt durch Umklappen der Dichtlippe realisiert wird. Die Verwendung von Plattenventilen bzw. Federrückschlagventilen stellt den Einsatz zusätzlicher Bauteile dar, die einen vergrößerten Bauraumbedarf der Ausrückeinrichtung benötigen. Solche Ventile sind gegenüber Verschmutzung empfindlich und erfüllen die Nachsaugfunktion erst, wenn Unterdrücke im Primärraum bereits auftreten. Auch bei einer umklappbaren Dichtlippe an der Primärdichtung besteht eine erhöhte Verschmutzungsgefahr, wobei die Nachsaugfunktion erst dann ausgeführt wird, wenn größere Unterdrücke auftreten. Die Schrift WO2012/097854 A1 offenbart eine Kolben-Zylinder-Anordnung gemäß Oberbegriff von Anspruch 1. Der Erfindung liegt somit die Aufgabe zugrunde, eine Kolben-Zylinder-Anordnung für eine Ausrückeinrichtung, insbesondere einen Geberzylinder für eine hydraulische Kupplungsbetätigungseinrichtung anzugeben, bei welcher eine Nachsaugfunktion trotz reduziertem Bauraum zuverlässig realisiert wird.

Erfindungsgemäß ist die Aufgabe dadurch gelöst, dass die Primärdichtung auf einem Schlitten angeordnet ist, welcher axial beweglich den Kolben radial umfasst, wobei in Abhängigkeit von der Position des Schlittens ein radialer Nachlaufspalt zwischen dem Primärraum und dem Sekundärraum geöffnet oder geschlossen ist. Der Schlitten als Träger der Primärdichtung erlaubt eine einfache Bewegung der Primärdichtung. Je nach Stellung des Schlittens, welcher eine Relativbewegung zum Kolben ausführt, wird eine Verbindung zwischen dem Primärraum und dem Sekundärraum der Kolben-Zylinder-Anordnung freigegeben, wodurch das Nachsaugen der Hydraulikflüssigkeit zur Verhinderung eines starken Unterdruckes in den Primärraum erfolgt. Durch die Relativbewegung des Schlittens zum Kolben wird ein extrem feinfühliges Nachsaugen der Hydraulikflüssigkeit aus dem Sekundärraum in den Primärraum ermöglicht. Auf zusätzliche Bauteile wird verzichtet, was zur Reduzierung des Bauraumes der Kolben-Zylinder-Anordnung führt. Verschmutzungen des Innenraumes des Gehäuses werden dabei unterbunden.

Vorteilhafterweise weist der die Primärdichtung tragende Schlitten zur axialen Bewegung der Primärdichtung, bei welcher die Primärdichtung gleitreibend am Gehäuse geführt ist, ein axiales Spiel zum Kolben auf. Mittels dieses Spiels wird der Schlitten und somit die Primärdichtung in Abhängigkeit von einem Druck im Primärraum und der Reibung zwischen Primärdichtung und Gehäuse in eine Position gebracht, bei welcher der Nachsaugspalt zwischen Sekundärraum und Primärraum automatisch geöffnet oder geschlossen wird.

In einer Ausgestaltung überragt ein Dichtungsrücken den Schlitten in axialer Richtung zum Kolben, wobei die axiale Ausdehnung der Dichtung einschließlich des Dichtungsrückens kleiner ist als das Spiel des Schlittens. Die Position des Dichtungsrückens bestimmt, ob der Nachlaufspalt zwischen Sekundärraum und Primärraum vorhanden ist und somit, ob ein Nachsaugvorgang erfolgen kann.

In einer Variante liegt der Dichtungsrücken bei einem Vorhub des Kolbens an diesem an, während bei einem Rückhub des Kolbens der Nachlaufspalt zwischen dem Dichtungsrücken und dem Kolben geöffnet ist, welcher eine Verbindung zwischen dem Primärraum und dem Sekundärraum bildet. Allein die Bewegung des Schlittens realisiert eine zuverlässige Verbindung zwischen dem Sekundär- und dem Primärraum, ohne dass zusätzliche Bauteile notwendig sind.

In einer Weiterbildung besteht die Primärdichtung aus einem Material mit hohen Reibeigenschaften gegenüber dem Material des Gehäuses, des Schlittens und/oder des Kolbens, während das Gehäuse, der Schlitten und der Kolben aus Materialien bestehen, welche annähernd gleiche Reibeigenschaften aufweisen. Auf Grund dieser Eigenschaften erfolgt das Nachsaugen druck- und reibungsgesteuert. Da die Primärdichtung auf einem, um ein gewisses Maß auf dem Kolben axial verschieblichen Schlitten aufgesetzt ist, ist die Reibung zwischen Gehäuse und Primärdichtung größer als zwischen Kolben und Primärdichtung. Beim Vorhub des Kolbens hilft die Reibung den Dichtungsrücken gegen den Kolben zu drücken, wodurch der Nachlaufspalt zwischen Primär- und Sekundärdichtung abgedichtet wird. Durch den Druck, der sich bei der Vorhubbewegung im Primärraum aufbaut und die dadurch auf die Primärdichtung wirkende Axialkraft ist die Abdichtung selbstverstärkend. Da beim Rückhub die Reibkraft der Primärdichtung am Gehäuse größer ist als die auf die Primärdichtung wirkende Druckkraft, zieht die Reibkraft die Primärdichtung vom Kolben weg und der Nachlaufspalt wird geöffnet. Nun kann entlang des Dichtungsrückens die Hydraulikflüssigkeit vom Sekundär- in den Primärraum strömen.

Vorteilhafterweise besteht die Primärdichtung aus einem Elastomer, wobei der Kolben und/oder das Gehäuse aus einem Kunststoff gefertigt sind. Durch diese Ausgestaltung ist der Nachsaugvorgang bereits dann aktiviert, wenn noch ein leichter Überdruck im Primärraum herrscht. Der Nachsaugvorgang spricht somit bei einem Rückhub sehr schnell an.

In einer Ausgestaltung sind eine Gleitdichtung und der Dichtungsrücken der Primärdichtung gegenüberliegend radial an dem Schlitten angespritzt sind, wobei die Gleitdichtung und der Dichtungsrücken vorzugsweise axial zueinander versetzt sind. Durch das Anspritzen der Gleitdichtung und des Dichtungsrückens an den Schlitten entsteht ein komplexes Zwei-Komponenten-Bauteil, welches bei der Montage der Kolben-Zylinder-Anordnung einfach zu handhaben ist.

In einer Variante weist die Gleitdichtung eine Hauptdichtlippe und daran anschließend eine "feinfühlige" Dichtlippe auf, welche sich radial in Richtung Kolben ausdehnen, wobei die "feinfühlige" Dichtlippe die Hauptdichtlippe überragt. Dadurch wird nicht nur eine hohe Empfindlichkeit der Gleitdichtung gegenüber Druckunterschieden gewährleistet, sondern gleichzeitig auch eine Abdichtung gegenüber Verunreinigungen ermöglicht.

Alternativ sind die Gleitdichtung, der Dichtungsrücken und eine zwischen Gleitdichtung und Dichtungsrücken angeordnete, sich parallel zur Bewegungsrichtung des Kolbens erstreckende Basis einteilig ausgebildet und umschließen den Schlitten annähernd. Die Verwendung zweier separater Bauteile wie die einteilige Primärdichtung, die sich aus Gleitdichtung, Dichtungsrücken und Basis zusammensetzt, und dem Schlitten erlaubt die Einstellung einer gute Vorspannung der Primärdichtung bei der Montage auf dem Schlitten, was die Dichteigenschaften der Primärdichtung erhöht.

In einer Variante weist der Schlitten einen ringförmigen, beabstandet zum Kolben über diesen ragenden Fortsatz auf. Mit Hilfe dieses Fortsatzes wird ein Filter geschaffen, da größere Verschmutzungen, welche nicht zwischen einem axial umlaufenden Spalt zwischen Kolben und Fortsatz passen, von dem Dichtungsrücken und somit von dem Nachlaufspalt, durch welchen die Hydraulikflüssigkeit vom Sekundärraum in den Primärraum geleitet wird, ferngehalten werden.

In einer Weiterbildung ist eine in Richtung des Primärraumes weisende Stirnseite des Kolbens mit einem stopfenähnlichen Element verschlossen, welches einen radialen Vorsprung zur Begrenzung der maximalen relativen Bewegung des Schlittens gegenüber dem Kolben aufweist.

Vorteilhafterweise ist der Schlitten als Gleitring ausgebildet. Ein solcher Gleitring stellt ein kostengünstiges Bauteil dar, welches in Massenproduktion herstellbar ist und somit die Kosten für die Herstellung der Kolben-Zylinder-Anordnung weiter reduziert.

Die Erfindung lässt zahlreiche Ausführungsformen zu. Eine davon soll anhand der in der Zeichnung dargestellten Figuren näher erläutert werden.

Es zeigt:
- Figur 1:: eine schematische Darstellung eines hydraulischen Kupplungssystems,
- Figur 2:: ein erstes Ausführungsbeispiel der erfindungsgemäßen Kolben-Zylinder-Anordnung,
- Figur 3:: ein zweites Ausführungsbeispiel der erfindungsgemäßen Kolben-Zylinder-Anordnung,
- Figur 4:: ein drittes Ausführungsbeispiel der erfindungsgemäßen Kolben-Zylinder-Anordnung,
- Figur 5:: ein viertes Ausführungsbeispiel der erfindungsgemäßen Kolben-Zylinder-Anordnung,
- Figur 6:: ein fünftes Ausführungsbeispiel der erfindungsgemäßen Kolben-Zylinder-Anordnung.

Gleiche Merkmale sind mit gleichen Bezugszeichen gekennzeichnet.

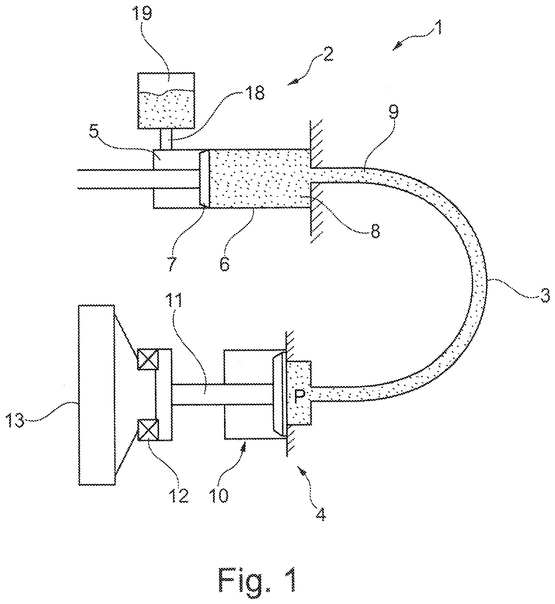

In Figur 1 ist eine Prinzipdarstellung eines hydraulischen Kupplungsbetätigungssystems 1 dargestellt. Dabei ist eine Geberseite 2 über eine Druckleitung 3 mit einer Nehmerseite 4 verbunden. Die Geberseite 2 umfasst dabei einen Geberzylinder 5, welcher ein zylinderförmiges Gehäuse 6 aufweist, in dem ein axial gelagerter Kolben 7 bewegbar ist. Der Kolben 7 wird dabei von einem nicht weiter dargestellten Stellglied angetrieben, welches durch eine Steuereinrichtung oder ein Fahrpedal realisiert ist. Der Geberzylinder 5 umfasst einen Primärraum 8, in welchem eine Hydraulikflüssigkeit 9 angeordnet ist, die durch die Druckleitung 3 zu einem Nehmerzylinder 10 auf der Nehmerseite 4 durch eine Bewegung des Kolbens 7 des Geberzylinders 5 transportiert wird. Durch die über den Geberzylinder 5 bewegte Hydraulikflüssigkeit 9 wird ein Kolben 11 des Nehmerzylinders 10 bewegt, welcher über ein Ausrücklager 12 eine Kupplung 13 betätigt.

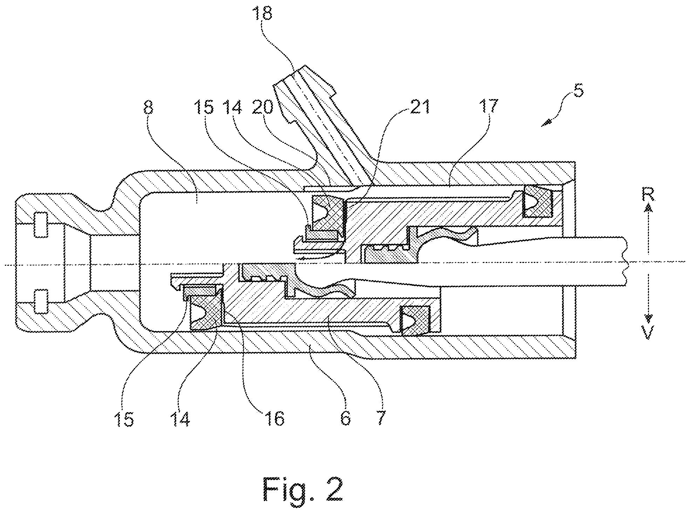

Ein erstes Ausführungsbeispiel für eine erfindungsgemäße Kolben-Zylinder-Anordnung soll anhand des Geberzylinders 5, welcher in Figur 2 dargestellt ist, erläutert werden. An der dem Primärraum 8 zugewandten Seite des Kolbens 7 ist umlaufend eine radiale Primärdichtung 14 angeordnet. Diese Primärdichtung 14 ist auf einem Gleitring 15, welcher direkt auf dem Kolben 7 aufliegt, positioniert. Die Primärdichtung 14 berührt mit ihrem radialen Rand die Innenseite des Gehäuses 6. Darüber hinaus weist die Primärdichtung 14 einen Dichtungsrücken 16 auf, welcher in axiale Richtung den aus einem Kunststoff bestehenden Gleitring 15 in Richtung zum Kolben 7 hin überragt.

Zwischen dem aus einem Kunststoff bestehenden Kolben 7 und dem ebenfalls aus einem Kunststoff hergestellten Gehäuse 6 ist, der Primärdichtung 14 abgekehrt, ein Sekundärraum 17 ausgebildet, welcher über eine Bohrung 18 mit einem Reservoir 19 (Figur 1) in Verbindung steht. Eine solche Verbindung ist notwendig, um einen Volumenausgleich der Hydraulikflüssigkeit des hydraulischen Systems bei Temperaturschwankungen zu ermöglichen. In Figur 2 zeigt die untere Hälfte der Darstellung den Kolben 7 in einem Vorhub V, während die obere Hälfte der Darstellung den Kolben 7 im Rückhub R dargestellt. Die aus einem Elastomer bestehende Primärdichtung 14 wird bei einem sogenannten Schnüffeln, dem Ansaugen der Hydraulikflüssigkeit aus dem Reservoir 19, hinter eine Schnüffelnut 20 gezogen, welche auf der Innenseite des Gehäuses 6 nahe der Bohrung 18 ausgebildet ist. Durch diese Schnüffelnut 20 wird eine Verbindung zwischen dem Primärraum 8 und dem Reservoir 19 geschaffen.

Die Primärdichtung 14 sitzt auf dem, um ein Spiel auf dem Kolben 7 axial verschieblichen Gleitring 15. Da die Primärdichtung 14 aus einem reibungsintensiveren Material besteht als das Gehäuse 6 bzw. der Gleitring 15, ist die zwischen dem Gehäuse 6 und der Primärdichtung 14 auftretende Reibung größer als die zwischen dem Kolben 7 und dem Gleitring 15. Bei dem Vorhub V hilft die Reibung den Dichtungsrücken 16, welcher den Gleitring 15 in axialer Richtung in Richtung Kolben 7 überragt, gegen die Stirnseite des Kolbens 7 zu drücken. Dadurch gibt es keinerlei Verbindung zwischen Primär- und Sekundärraum 8, 17. Der Kolben 7 ist über den Dichtungsrücken 16 vollständig abgedichtet. Durch den Druck, der sich bei der Vorhubbewegung im Primärraum 8 aufbaut und die dadurch auf die Primärdichtung 14 wirkende Axialkraft ist die Abdichtung selbstverstärkend. Wenn beim Rückhub R die Reibkraft der Primärdichtung 14 am Gehäuse 6 größer ist als die auf die Primärdichtung 14 wirkende Druckkraft der Hydraulikflüssigkeit 9 im Primärraum 8, wird die Primärdichtung 14 vom Kolben 7 weggezogen. Es bildet sich ein Nachlaufspalt 21 in radialer Richtung zwischen dem Dichtungsrücken 16 und dem Kolben 7. Nun kann entlang des Dichtungsrückens 16 Hydraulikflüssigkeit vom Sekundärraum 17 in den Primärraum 8 strömen, um einen zu hohen Unterdruck im Primärraum 8 zu unterbinden. Somit ist der Nachsaugmechanismus bereits immer dann aktiviert, wenn noch ein leichter Überdruck im Primärraum 8 herrscht. Der Nachsaugmechanismus spricht somit beim Rückhub sehr schnell an.

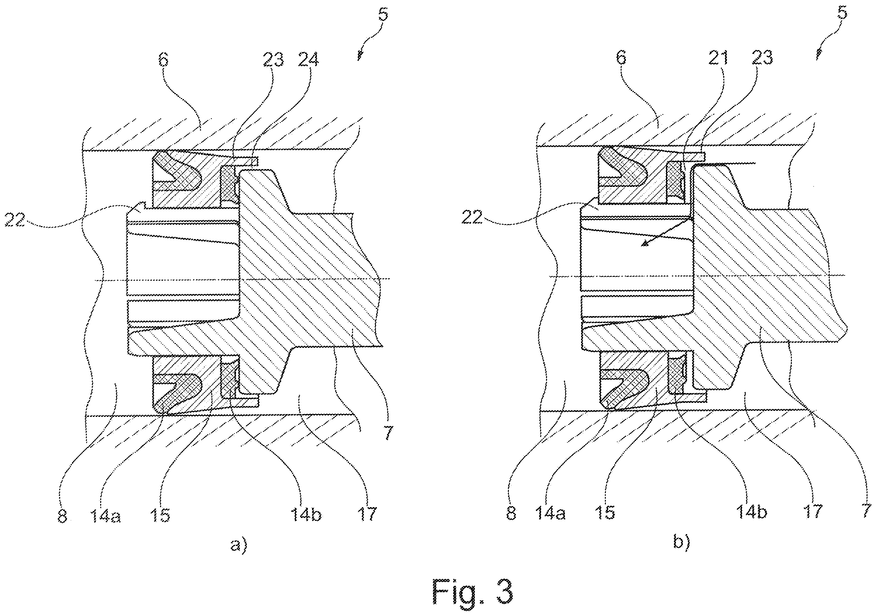

Eine zweite Ausführungsform des Geberzylinders 5 ist in Figur 3 dargestellt, bei welcher Figur 3a den Geberzylinder 5 in einer Vorhubbewegung zeigt, während Figur 3b eine Rückhubbewegung des Geberzylinders 5 kennzeichnet. In beiden Fällen umfasst die Primärdichtung 14 zwei Teile, die lippenförmige Gleitdichtung 14a und den Dichtungsrücken 14b. Die Gleitdichtung 14a und der Dichtungsrücken 14b sind an den annähernd senkrecht zur Wandung des Gehäuses 6 sich erstreckenden Seiten des Gleitringes 15 angespritzt. Der Dichtungsrücken 14b drückt dabei gegen die Stirnwand des Kolbens 7, während die Gleitdichtung 14a gleitend gegenüber dem Gehäuse 6 geführt ist. Wie bereits beschrieben, dichtet der Dichtungsrücken 14b den Kolben 7 beim Vorhub des Geberzylinders 5 vollständig ab, so dass keinerlei Verbindung zwischen dem Primärraum 8 und dem Sekundärraum 17 vorhanden ist. Dies steht im Gegensatz zu Figur 3b, wo eine Rückhubbewegung des Kolbens 7 verdeutlicht ist. Dabei wird zwischen der Stirnwand des Kolbens 7 und dem Dichtungsrücken 14b der radiale Nachlaufspalt 21 freigegeben, durch welchen ein sensibles Nachsaugen der Hydraulikflüssigkeit 9 aus dem Sekundärraum 17 in den Primärraum 8 erfolgt. Ein solches Nachsaugen wird somit in Abhängigkeit der im Geberzylinder 2 vorhandenen Druck- und Reibungsverhältnisse ausgelöst.

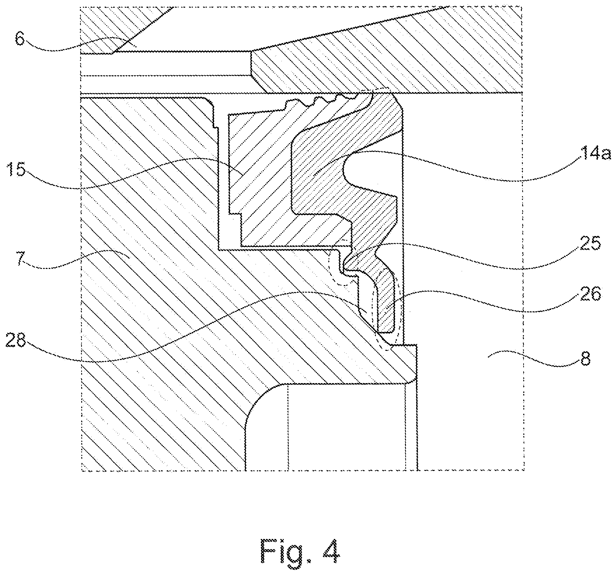

In Figur 4 ist eine bevorzugte Ausführungsform der lippenförmigen Gleitdichtung 14a dargestellt. Die Gleitdichtung 14a umfasst dabei eine Hauptdichtlippe 25 und eine "feinfühlige" Dichtlippe 26, welche beide radial in Richtung des Kolbens 7 weisen und dabei den Gleitring 15 überragen. Um die Funktion der Hauptdichtlippe 25 und der "feinfühligen" Lippe 26 zu realisieren, weist der Kolben 7 in dem Bereich, wo die Dichtlippen 25, 26 anliegen eine als Abstufung ausgebildete Schnüffelnut 27 auf. Die "feinfühlige" Dichtlippe 26, welche dem Primärraum 8 direkt gegenüber liegt und länger ausgebildet ist als die Hauptdichtlippe 25, kontaktiert den Kolben 7 und dichtet den Geberzylinder 5 schon bei niedrigen Drücken ab, da diese sich schnell verformt. Die Hauptdichtlippe 25, welche zwischen dem Gleitring 15 und der "feinfühligen" Dichtlippe 26 ausgebildet ist, dichtet bei großen Drücken ab. Somit wird durch diese beiden Dichtlippen 25. 26 der Gleitdichtung 14a eine gute Empfindlichkeit gegen Verschmutzung erreicht. Bei Vakuum wird der Gleitring 15 und die mit dem Gleitring 15 verbundene Primärdichtung 14 angesaugt, wobei die Hauptdichtlippe 25 und auch die "feinfühlige" Dichtlippe 26 den Kontakt zu dem Kolben 7 verlieren, wobei Hydraulikflüssigkeit 9 aus dem Reservoir 19 in den Primärraum 8 fließen kann.

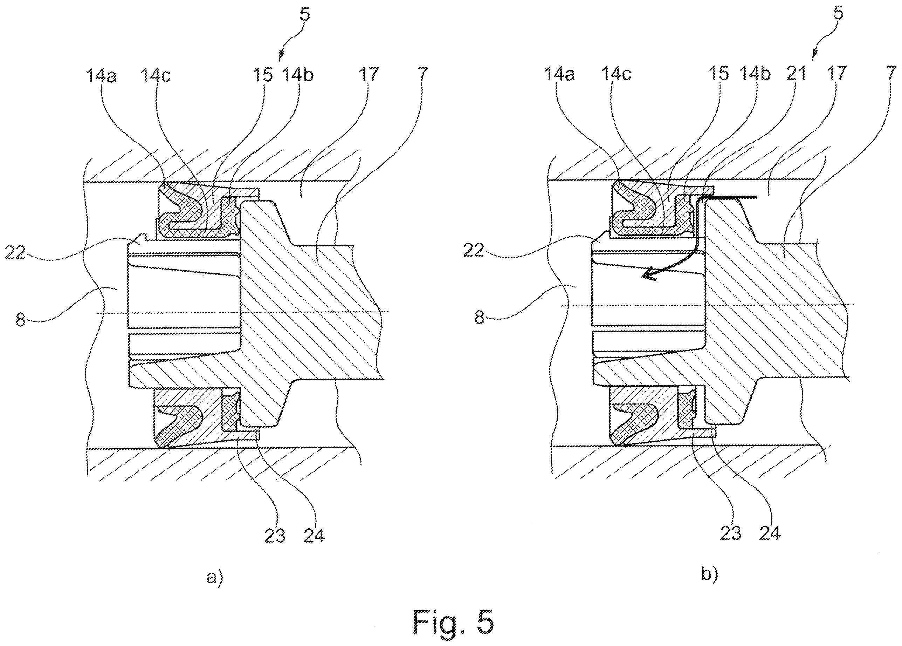

Figur 5 zeigt ein viertes Ausführungsbeispiel des erfindungsgemäßen Geberzylinders 5, bei welchem insbesondere die Primärdichtung 14 einteilig ausgebildet ist. Während bei Figur 3 und 4 Gleitring 15 und Primärdichtung 14 ein Zwei-Komponenten-Bauteil bilden, wird bei Figur 4 davon ausgegangen, dass die Primärdichtung 14 und der Gleitring 15 zwei separate Bauteile darstellen. Dabei wird die als Elastomer ausgebildete Primärdichtung 14, welche ebenfalls die Gleitdichtung 14a und den Dichtungsrücken 14b aufweist, um den Gleitring 15 gespannt. Die Gleitdichtung 14a und der Dichtungsrücken 14b sind in Bewegungsrichtung des Kolbens 7 durch eine Basis 14c verbunden, welche auf dem Gleitring 15 aufliegt. Auch in diesem Fall wird der Gleitring 15 durch die auftretenden Druck- und Reibungsverhältnisse im Vorhub gegen die Stirnseite des Kolbens 7 gepresst (Figur 4a), während bei dem in Figur 4b dargestellten Rückhub des Kolbens 7 der Gleitring 15 mit der Primärdichtung 14 gegen einen Vorsprung 22 des Kolbens 7 maximal verfahren werden kann, um den radialen Nachlaufspalt 21 zwischen dem Dichtungsrücken 14b und der Stirnseite des Kolbens 7 freizugeben.

Sowohl in Figur 3 als auch in Figur 5 weist der Gleitring 15 einen ringförmigen Fortsatz 23 auf, der über den Kolben 7 beabstandet zu diesem ragt. Durch diesen ringförmigen Fortsatz 23 wird mit dem Kolben 7 ein Ringspalt 24 gebildet, welcher als Filter dient und gröbere Verschmutzungen von dem Dichtungsrücken 14b fernhält.

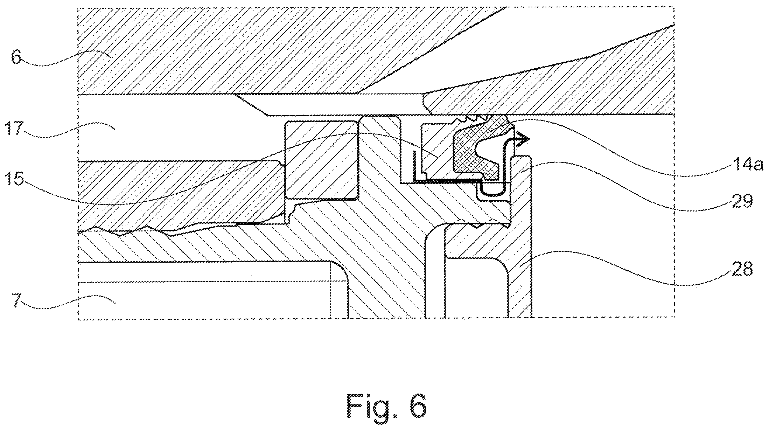

In der Figur 6 ist ein weiteres Ausführungsbeispiel des Geberzylinders 5 dargestellt, wobei insbesondere eine Begrenzung für die maximale relative Beweglichkeit des Gleitringes 15 gegenüber dem Kolben 7 verdeutlicht ist. So ist eine Stirnseite des Kolbens 7, welche dem Primärraum 8 zugewandt ist mittels eines stopfenähnlichen Elementes 28 verschlossen. Das stopfenähnliche Element 28 weist dabei einen radialen Vorsprung 29 in Richtung des Gehäuses 6 auf, welcher somit einen Anschlag für den Gleitring 15 darstellt. Alternativ dazu kann die Begrenzung des Gleitringes 15 auch über einen Sprengring oder einen Schnapphaken realisiert werden.

Die beschriebene Kolben-Zylinder-Anordnung mit Nachsaugfunktion wird in hydraulischen Ausrücksystemen eingesetzt. Aufgrund der Beweglichkeit des die Primärdichtung 14 tragenden Gleitringes 15, welcher als Schlitten benutzt wird, erhält die Primärdichtung 14 ein Axialspiel, welches ein extrem feinfühliges Nachsaugen ermöglicht.

### Bezugszeichenliste

- 1: hydraulisches Kupplungsbetätigungssystem
- 2: Geberseite
- 3: Druckleitung
- 4: Nehmerseite
- 5: Geberzylinder
- 6: Gehäuse
- 7: Kolben
- 8: Primärraum
- 9: Hydraulikflüssigkeit
- 10: Nehmerzylinder
- 11: Kolben
- 12: Ausrücklager
- 13: Kupplung
- 14: Primärdichtung
- 14a: Gleitdichtung
- 14b: Dichtungsrücken
- 14c: Basis
- 15: Gleitring
- 16: Dichtungsrücken
- 17: Sekundärraum
- 18: Bohrung
- 19: Reservoir
- 20: Schnüffelnut
- 21: Nachlaufspalt
- 22: Vorsprung
- 23: Fortsatz
- 24: Ringspalt
- 25: Hauptdichtlippe
- 26: "feinfühlige" Dichtlippe
- 27: Schnüffelnut
- 28: Stopfenähnliches Element
- 29: Vorsprung
- V: Vorhub
- R: Rückhub

## Patentansprüche

1. Kolben-Zylinder-Anordnung für eine hydraulische Ausrückeinrichtung, insbesondere ein Geberzylinder einer Kupplungsbetätigungseinrichtung, umfassend ein Gehäuse (6), in welchem ein Kolben (7) axial beweglich gelagert ist, wobei vor dem Kolben (7) in dessen Betätigungsrichtung ein Primärraum (8) aufgespannt ist, welcher mittels einer den Kolben (7) radial umspannten Primärdichtung (14) gegen einen Sekundärraum (17) zwischen dem Gehäuse (6) und dem Kolben (7) abgedichtet ist **dadurch gekennzeichnet, dass** die Primärdichtung (14) auf einem Schlitten (15) angeordnet ist, welcher axial beweglich den Kolben (7) radial umfasst, wobei in Abhängigkeit von der Position des Schlittens (15) ein radialer Nachlaufspalt (21) zwischen dem Primärraum (8) und dem Sekundärraum (17) geöffnet oder geschlossen ist.

2. Kolben-Zylinder-Anordnung nach Anspruch 1, **dadurch gekennzeichnet, dass** der die Primärdichtung (14) tragende Schlitten (15) zur axialen Bewegung der Primärdichtung (14), bei welcher die Primärdichtung (14) gleitreibend am Gehäuse (6) geführt ist, ein axiales Spiel zum Kolben (7) aufweist.

3. Kolben-Zylinder-Anordnung nach Anspruch 2, **dadurch gekennzeichnet, dass** ein Dichtungsrücken (14b, 16) den Schlitten (15) in axialer Richtung zum Kolben (7) überragt, wobei die axiale Ausdehnung der Primärdichtung (14) einschließlich des Dichtungsrückens (14b, 16) kleiner ist als das Spiel des Schlittens (15).

4. Kolben-Zylinder-Anordnung nach Anspruch 1, 2 oder 3, **dadurch gekennzeichnet, dass** der Dichtungsrücken (14b, 16) bei einem Vorhub (V) des Kolbens (7) an diesem anliegt, während bei einem Rückhub (R) des Kolbens (7) der Nachlaufspalt (21) zwischen dem Dichtungsrücken (14b, 16) und dem Kolben (7) geöffnet ist, welcher eine Verbindung zwischen Sekundärraum (17) und Primärraum (8) bildet.

5. Kolben-Zylinder-Anordnung nach einem der vorhergehenden Ansprüche, **dadurch gekennzeichnet, dass** die Primärdichtung (14) aus einem Material mit hohen Reibeigenschaften gegenüber dem Material des Gehäuses (6), des Schlittens (15) und/oder des Kolbens (7) besteht, während das Gehäuse (6), der Schlitten (15) und der Kolben (7) aus Materialien bestehen, welche annähernd gleiche Reibeigenschaften aufweisen.

6. Kolben-Zylinder-Anordnung nach Anspruch 5, **dadurch gekennzeichnet, dass** die Primärdichtung (14) aus einem Elastomer besteht und/oder der Kolben (7), der Schlitten (15) und das Gehäuse (6) aus einem Kunststoff gefertigt sind.

7. Kolben-Zylinder-Anordnung nach mindestens einem der vorhergehenden Ansprüche, **dadurch gekennzeichnet, dass** eine Gleitdichtung (14a) und der Dichtungsrücken (14b) der Primärdichtung (14) gegenüberliegend radial an dem Schlitten (15) angespritzt sind, wobei die Gleitdichtung (14a) und der Dichtungsrücken (14b) vorzugsweise axial zueinander versetzt sind.

8. Kolben-Zylinder-Anordnung nach Anspruch 7, **dadurch gekennzeichnet, dass** die Gleitdichtung (14a) eine Hauptdichtlippe (25) und daran axial anschließend eine "feinfühlige" Dichtlippe (26) aufweist, welche sich radial in Richtung Kolben (7) ausdehnen, wobei die "feinfühlige" Dichtlippe (26) die Hauptdichtlippe (25) überragt.

9. Kolben-Zylinder-Anordnung nach mindestens einem der vorhergehenden Ansprüche 1 bis 6, **dadurch gekennzeichnet, dass** die Gleitdichtung (14a), der Dichtungsrücken (14b) und eine zwischen Gleitdichtung (14a) und Dichtungsrücken (14b) angeordnete, sich parallel zur Bewegungsrichtung des Kolbens (7) erstreckende Basis (14c) einteilig ausgebildet sind und den Schlitten (15) annähernd umschließen.

10. Kolben-Zylinder-Anordnung nach mindestens einem der vorhergehenden Ansprüche, **dadurch gekennzeichnet, dass** der Schlitten (15) einen ringförmigen, beabstandet zum Kolben (7) über diesen ragenden Fortsatz (23) aufweist.

11. Kolben-Zylinder-Anordnung nach mindestens einem der vorhergehenden Ansprüche, **dadurch gekennzeichnet, dass** eine in Richtung des Primärraumes (8) weisende Stirnseite des Kolbens (7) mit einem stopfenähnlichen Element (28) verschlossen ist, welches einen radialen Vorsprung (29) zur Begrenzung der maximalen relativen Bewegung des Schlittens (15) gegenüber dem Kolben (7) aufweist.

12. Kolben-Zylinder-Anordnung nach einem der vorhergehenden Ansprüche, **dadurch gekennzeichnet, dass** der Schlitten (15) als Gleitring ausgebildet ist.

## Claims

1. Piston/cylinder arrangement for a hydraulic release device, in particular a master cylinder of a clutch actuating device, comprising a housing (6), in which a piston (7) is mounted axially movably, a primary space (8) being defined in front of the piston (7) in its actuating direction, which primary space (8) is sealed with respect to a secondary space (17) between the housing (6) and the piston (7) by means of a primary seal (14) which radially encompasses the piston (7), **characterized in that** the primary seal (14) is arranged on a carriage (15) which radially encompasses the piston (7) in an axially movable manner, a radial return gap (21) between the primary space (8) and the secondary space (17) being open or closed in a manner which is dependent on the position of the carriage (15).

2. Piston/cylinder arrangement according to Claim 1, **characterized in that** the carriage (15) which supports the primary seal (14) has an axial play with respect to the piston (7) for the axial movement of the primary seal (14), in the case of which axial movement the primary seal (14) is guided with sliding friction on the housing (6).

3. Piston/cylinder arrangement according to Claim 2, **characterized in that** a seal back (14b, 16) protrudes beyond the carriage (15) in the axial direction toward the piston (7), the axial extent of the primary seal (14) including the seal back (14b, 16) being smaller than the play of the carriage (15).

4. Piston/cylinder arrangement according to Claim 1, 2 or 3, **characterized in that** the seal back (14b, 16) bears against the piston (7) in the case of a forward stroke (V) of the said piston (7), whereas the return gap (21) between the seal back (14b, 16) and the piston (7) is open in the case of a return stroke (R) of the piston (7), which return gap (21) forms a connection between the secondary space (17) and the primary space (8).

5. Piston/cylinder arrangement according to one of the preceding claims, **characterized in that** the primary seal (14) consists of a material with high frictional properties in comparison with the material of the housing (6), the carriage (15) and/or the piston (7), whereas the housing (6), the carriage (15) and the piston (7) consist of materials which have approximately identical frictional properties.

6. Piston/cylinder arrangement according to Claim 5, **characterized in that** the primary seal (14) consists of an elastomer, and/or the piston (7), the carriage (15) and the housing (6) are manufactured from a plastic.

7. Piston/cylinder arrangement according to at least one of the preceding claims, **characterized in that** a sliding seal (14a) and the seal back (14b) of the primary seal (14) are moulded onto the carriage (15) so as to lie radially opposite one another, the sliding seal (14a) and the seal back (14b) preferably being offset axially with respect to one another.

8. Piston/cylinder arrangement according to Claim 7, **characterized in that** the sliding seal (14a) has a main sealing lip (25) and, adjoining the former axially, a "delicate" sealing lip (26), which sealing lips (25, 26) extend radially in the direction of the piston (7), the "delicate" sealing lip (26) protruding beyond the main sealing lip (25).

9. Piston/cylinder arrangement according to at least one of the preceding Claims 1 to 6, **characterized in that** the sliding seal (14a), the seal back (14b) and a base (14c) which is arranged between the sliding seal (14a) and the seal back (14b) and extends parallel to the movement direction of the piston (7) are configured in one piece and approximately enclose the carriage (15).

10. Piston/cylinder arrangement according to at least one of the preceding claims, **characterized in that** the carriage (15) has an annular extension (23) which protrudes beyond the piston (7) in a manner which is spaced apart from the said piston (7).

11. Piston/cylinder arrangement according to at least one of the preceding claims, **characterized in that** an end face of the piston (7), which end face points in the direction of the primary space (8), is closed by way of a plug-like element (28) which has a radial projection (29) for limiting the maximum relative movement of the carriage (15) with respect to the piston (7).

12. Piston/cylinder arrangement according to one of the preceding claims, **characterized in that** the carriage (15) is configured as a sliding ring.

## Revendications

1. Agencement cylindre-piston pour un dispositif de débrayage hydraulique, en particulier un maître-cylindre d'un dispositif d'actionnement d'embrayage, comprenant un boîtier (6) dans lequel est supporté de manière déplaçable axialement un piston (7), un espace primaire (8) étant défini avant le piston (7) dans sa direction d'actionnement, lequel est étanchéifié, au moyen d'un joint primaire (14) tendu radialement autour du piston (7), par rapport à un espace secondaire (17) entre le boîtier (6) et le piston (7), **caractérisé en ce que** le joint primaire (14) disposée sur un chariot (15) qui entoure radialement le piston (7) de manière déplaçable axialement, une fente d'alimentation radiale (21) entre l'espace primaire (8) et l'espace secondaire (17) étant ouverte ou fermée en fonction de la position du chariot (15).

2. Agencement cylindre-piston selon la revendication 1, **caractérisé en ce que** le chariot (15) portant le joint primaire (14) présente un jeu axial par rapport au piston (7) pour le déplacement axial du joint primaire (14), au cours duquel le joint primaire (14) est guidé par frottement glissant sur le boîtier (6).

3. Agencement cylindre-piston selon la revendication 2, **caractérisé en ce qu'**un dos du joint (14b, 16) dépasse du chariot (15) dans la direction axiale vers le piston (7), l'étendue axiale du joint primaire (14) avec le dos du joint (14b, 16) étant inférieure au jeu du chariot (15).

4. Agencement cylindre-piston selon la revendication 1, 2 ou 3, **caractérisé en ce que** le dos du joint (14b, 16), lors d'une précourse (V) du piston (7), s'applique contre celui-ci, tandis que lors d'une course de retour (R) du piston (7), la fente d'alimentation (21) entre le dos du joint (14b, 16) et le piston (7) est ouverte, laquelle forme une liaison entre l'espace secondaire (17) et l'espace primaire (8).

5. Agencement cylindre-piston selon l'une quelconque des revendications précédentes, **caractérisé en ce que** le joint primaire (14) est constitué d'un matériau ayant des propriétés de friction élevées par rapport au matériau du boîtier (6), du chariot (15) et/ou du piston (7), tandis que le boîtier (6), le chariot (15) et le piston (7) se composent de matériaux qui présentent approximativement les mêmes propriétés de friction.

6. Agencement cylindre-piston selon la revendication 5, **caractérisé en ce que** le joint primaire (14) se compose d'un élastomère et/ou le piston (7), le chariot (15) et le boîtier (6) sont fabriqués à partir d'un plastique.

7. Agencement cylindre-piston selon au moins l'une quelconque des revendications précédentes, **caractérisé en ce qu'**un joint glissant (14a) et le dos du joint (14b) du joint primaire (14) sont surmoulés de manière radialement opposée sur le chariot (15), le joint glissant (14a) et le dos du joint (14b) étant de préférence décalés axialement l'un par rapport à l'autre.

8. Agencement cylindre-piston selon la revendication 7, **caractérisé en ce que** le joint glissant (14a) présente une lèvre d'étanchéité principale (25) et une lèvre d'étanchéité "sensible" (26) s'y raccordant axialement, lesquelles s'étendent radialement dans la direction du piston (7), la lèvre d'étanchéité "sensible" (26) dépassant au-delà de la lèvre d'étanchéité principale (25).

9. Agencement cylindre-piston selon au moins l'une quelconque des revendications précédentes 1 à 6, **caractérisé en ce que** le joint glissant (14a), le dos du joint (14b) et une base (14c) disposée entre le joint glissant (14a) et le dos du joint (14b), s'étendant parallèlement à la direction de déplacement du piston (7), sont réalisées d'une seule pièce et entourent approximativement le chariot (15).

10. Agencement cylindre-piston selon au moins l'une quelconque des revendications précédentes, **caractérisé en ce que** le chariot (15) présente une saillie (23) de forme annulaire, espacée du piston (7) et dépassant au-delà de celui-ci.

11. Agencement cylindre-piston selon au moins l'une quelconque des revendications précédentes, **caractérisé en ce qu'**un côté frontal du piston (7) tourné dans la direction de l'espace primaire (8) est fermé avec un élément de type bouchon (28) qui présente une saillie radiale (29) pour limiter le déplacement relatif maximal du chariot (15) par rapport au piston (7).

12. Agencement cylindre piston selon l'une quelconque des revendications précédentes, **caractérisé en ce que** le chariot (15) est réalisé sous forme de bague de glissement.
